# EUROPEAN PATENT APPLICATION

(11) **EP 1 293 915 A2**
(43) Date of publication of application: **19.03.2003**
(21) Application number: 02292269.4
(22) Date of filing: 17.09.2002
(51) Int. Cl.: G06F 17/30

(54) **Search system and method**

(30) Priority: 17.09.2001 KR 2001057362
(71) Applicant: Netpia Dot Com, Inc., Seoul 150-038 (KR)
(72) Inventor: Bae, Jeen-Hyun, Kwanak-gu, Seoul 151-812 (KR); Lee, Pan-Jung, Youngdeungpo-gu, Seoul 150-038 (KR)
(74) Representative: Habasque, Etienne Joel Jean-François

(57) **Abstract**

Disclosed is a searching system and method. When a client provides a keyword to a searching server, the searching server requests a group keyword from a keyword processing server, and a processing server finds a group keyword from a group keyword database and provides it to the searching server. The searching server provides the client with a search result page including the group keyword and the keyword together with search information matched with the input keyword, and when the client selects the keyword or the group keyword in the search result page, the searching server requests a network address matched with the selected keyword or the group keyword from a real name server. The real name server provides the network address matched with the keyword or the group keyword to the searching server so that the searching server connects the client to the web page corresponding to the network address. Therefore, the client receives a group keyword for providing a direct linking service related to the input keyword through a single keyword input, thereby accessing the desired web page via a minimum number of stages.

## Description

### BACKGROUND OF THE INVENTION

### (a) Field of the Invention

The present invention relates to a searching system and method thereof. More specifically, the present invention relates to a system and method for searching various types of information on predetermined keywords scattered on the network and providing the same.

### (b) Description of the Related Art

In general, people have collected information through media such as books, televisions, and newspapers, and as the Internet has quickly been popularized, users all over the world have come to share various categories of information through the Internet, and accordingly, the tendency for searching information through the Internet has gradually increased.

However, since various and almost limitless categories of information are spread on the Internet, it is not easy for Internet users to find desired information. To solve this inconvenience, various search site providers extract classified types of information from the scattered ones and provide them to the Internet users.

The search sites provide accessing Internet users with input windows for inputting keywords, search information scattered on the Internet on the basis of the keywords input through the input windows, and sort information desired by the users, and provide them to the users.

Recently, the above-noted search sites have not only provided search information on the input keywords, but they also connect the clients to web pages that match the input keywords.

In detail, the search sites provide the client with search results of the input keywords together with the input keywords on a search result page, and when the client clicks a corresponding keyword, the client gains access to the web page corresponding to the keyword.

However, since the web pages that are matched with the keywords provided by the client are frequently not the web pages desired by the client in the prior art, the client is required to repeatedly access web pages until the correct web page is accessed.

For example, the client inputs a keyword 'car,' receives various types of information related to cars on the search result web page, determines that the web page matched with 'car' is that of Hyundai Motor Company, and clicks the keyword 'car' displayed on the search result web page. But if the keyword 'car' is linked to the web site of Kia Motors, the client is connected to a different web page that is not desired by the client, and hence, the client needs to repeat the access process several times.

Further, when the keyword used for providing the web page access service on the search site is not a proper noun, but is a general term in the like manner of the 'car,' it is difficult to analogize the matched web pages, and accordingly, the client may be connected to wrong web pages as described above.

### SUMMARY OF THE INVENTION

It is an object of the present invention to provide a searching system and method for providing keyword searching information and a direct linking service to a plurality of keywords so that a client may receive various types of searching information and correctly access desired web pages.

In this instance, the direct linking service represents a function for connecting the client to a web page that corresponds to a keyword when the client clicks a keyword on a search result page. Also, the web pages comprises servers for providing network-based services including electronic mail, the FTP (file transfer protocol), and the telnet as well as the WWW (world wide web).

In one aspect of the present invention, a searching system for providing a searching service to a plurality of clients accessing through a network comprises: a group keyword database for storing a group keyword for each keyword; a real name database for storing a real name and a network address, the real name being matched with the network address; a processing server for searching the group keyword database on the basis of the input keyword to find a corresponding group keyword; a searching server for requesting a group keyword from the processing server when a keyword is input from the client accessing through the network, and providing the client with a search result page including the keyword and the group keyword together with search information corresponding to the input keyword; and a real name server for determining, when the client selects the keyword or the group keyword in the search result page, whether the selected keyword or the group keyword is a real name, and when it is a real name, providing the client with a network address matched with the keyword or the group keyword selected from the real name database so that the client may access the web page matched with the network address.

The searching server requests a network address from the real name server when the client selects the keyword or the group keyword in the search result page, and the real name server provides the searching server with a network address matched with the selected keyword or the group keyword so that the searching server may connect the client to the web page matched with the network address.

The searching system further comprising a web server for providing a keyword input window to the client accessing through the network, and the web server provides the keyword to the searching server when the keyword is input from the client through the keyword input window.

In another aspect of the present invention, a searching method by a system connected to a plurality of clients and searching servers through a network comprises: searching a group keyword database on the basis of a keyword, when the keyword input by the client is provided from the searching server, to find a corresponding group keyword and providing the same to the searching server; and providing the searching server with the network address matched with the selected keyword or the group keyword when a network address request matched with the keyword or the group keyword is input from the searching server, so that the searching server connects the client to the web page corresponding to the network address.

The searching method further comprises: the searching server providing the client with a search result page including the group keyword and the keyword together with search information corresponding to the keyword input by the client; and requesting a network address matched with a selected keyword or a group keyword when the client selects the keyword or the group keyword in the search result page.

In still another aspect of the present invention, a searching method by a system for providing a searching service to a plurality of clients accessing through a network comprises: searching a group keyword database on the basis of a keyword, when the keyword is input from the client, to find a corresponding group keyword; providing the client with a search result page including the keyword and the group keyword together with search information matched with the keyword; and providing the client with the network address matched with the selected keyword or the group keyword when the client selects the keyword or the group keyword in the search result page, so that the client may access the web page matched with the network address.

The keyword stored in the group keyword database includes a general term registration keyword and a company name registration keyword, and the general term registration keyword is matched with at least one keyword as a group keyword, the keyword including a corresponding general term keyword, and the company name registration keyword is matched with at least one keyword as a group keyword, the keyword corresponding to products sold by group, product names of services, or service names.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 shows a block diagram of a searching system according to a preferred embodiment of the present invention; and
FIGs. 2(a) and 2(b) show a flowchart of an operation by the searching system according to a preferred embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

The searching system according to the preferred embodiment of the present invention provides various types of searching information that correspond to a keyword input by the client on the network, and provides a keyword and a group keyword related to the keyword when the keyword is a real name so that the client may selectively access a web page that corresponds to the keyword or the group keyword, thereby accurately accessing the client to the desired web page.

In this instance, the real name comprises the Korean alphabet, foreign alphabets except the English alphabet, numbers, and symbols respectively matched with network addresses (including IP (Internet protocol) addresses and URL (uniform resource locator) information) registered on the network, and it further comprises English that digresses from the existing domain format (such as a domain name without dots ".").

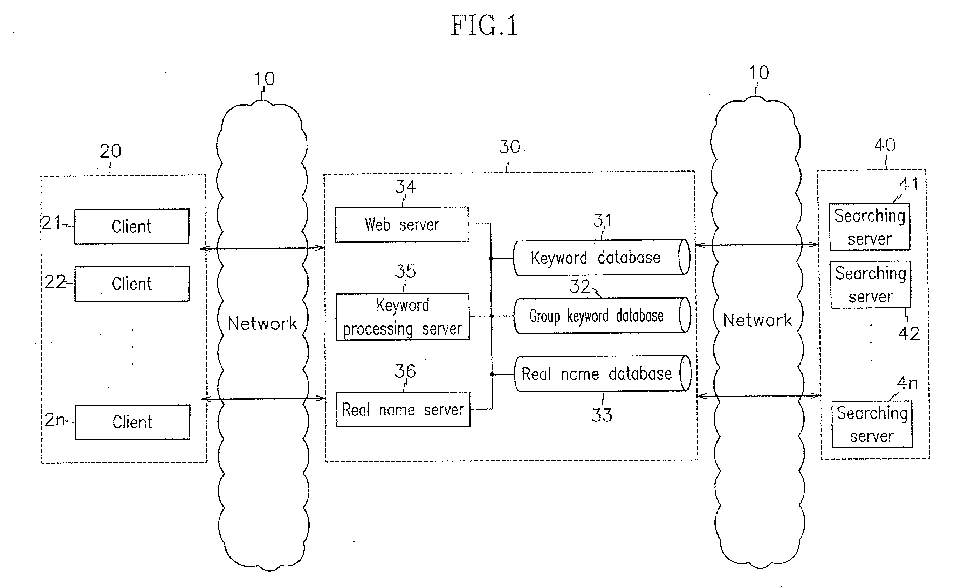

FIG. 1 shows a configuration of the searching system according to the preferred embodiment of the present invention.

As shown, the searching system comprises: an access agency device 30 connected to a plurality of clients 21 to 2n, 20 through a network 10; and a plurality of searching servers 41 to 4n, 40.

The client 20 comprises communication devices for accessing the searching system through the network 10, for example, a computer, a wireless communication terminal, and an Internet television.

The searching server 40 provides a searching service to the client that is accessed through the network 10, and in particular, it provides a web page access service together with the searching service in concert with the access agency device 30. The searching server 40 requests a group keyword related to a keyword from the access agency device 30 when the keyword is input from the client 20.

The access agency device 30 provides a group keyword on the keyword according to a request by the searching server 40, and concurrently provides a web page access service (a direct linking service) on the keyword and the group keyword. The access agency device 30 comprises: a keyword database 31; a group keyword database 32; a real name database 33; a web server 34; a keyword processing server 35; and a real name server 36.

The keyword database 31 stores a plurality of keywords (referred to as registration keywords hereinafter) registered for receiving the direct linking service through the searching server 40. The group keyword database 32 stores group keywords matched with the registration keywords. The registration keywords include "general term registration keywords" and "company name registration keywords," and the group keywords comprise a plurality of keywords related to each registration keyword.

The general term registration keywords are keywords registered for receiving the direct linking service to the general terms such as "computer" and "car", and the keywords registered by an individual person or a group (e.g., a company or an agency) for doing business on the general term registration keywords are stored as a corresponding group keyword of the general term registration keywords in a format that includes the corresponding general terms. For example, various keywords such as "Samsung computer," "Trigem computer," and "LG computer" related to computers are registered as group keywords corresponding to the general term registration keyword "computer," and the keywords "Renault Samsung Motors," "Hyundai Motor Company," and "Kia Motors" are registered as group keywords corresponding to the general term registration keyword "car."

The company name registration keywords are keywords (e.g., company names and agency names) registered for receiving the direct linking service to the corresponding web pages for each group (e.g., companies or agencies), and the keywords including service names and product titles serviced by the corresponding group related to the company name registration keyword are registered and stored as a group keyword of the company name registration keyword. For example, in correspondence to the company name registration keyword "Cheiljedang," the product or service titles "Haetban" and "Tasida" made by Cheiljedang are registered as group keywords, and corresponding to the company name registration keyword "Samsung Electronics," the keywords of the products such as "Mymy," "Zipel," and "Magic Station" made by Samsung Electronics are registered and stored under a group keyword.

The real name database 33 stores at least one real name corresponding to each IP address on the network 10, and further stores URL information corresponding to each real name. For example, corresponding to an IP address "210.103.175.66," a real name "Netpia" is stored, and in correspondence to "Netpia," URL information "netpia.net" is stored. In the present invention, the keywords stored in the keyword database 31 and the group keyword database 32 represent the real names, and the Internet addresses (e.g., IP addresses and URL information) corresponding to the keywords are stored in the real name database 33.

The respective servers 34 to 36 are operated on the basis of the information stored in the databases 31 to 33, the web server 34 executes a web function for enabling the client 20 to access through the network 10, and the keyword processing server 35 searches group keywords to find a desired one depending on whether the keyword provided by the searching server 40 is a keyword registered for receiving the direct linking service. In detail, the keyword processing server 35 determines the above-noted keyword as a registered one according to whether the keyword provided by the searching server 40 is stored in the keyword database 31, and when it is a registered keyword, the keyword processing server 35 finds a matched group keyword from the group keyword database 32 and provides the same to the searching server 40.

Also, the searching server 40 collects keyword-related information from a plurality of web pages on the network 10 on the basis of the keywords provided by the keyword processing server 35, and in particular, it displays on a search result page the keyword provided by the keyword processing server 35 and the group keyword together with the collected information, that is, search results, and displays the keyword and the group keyword in a direct linking tag format. When the client 20 clicks a keyword or a group keyword, the searching server 40 requests a corresponding Internet address (e.g., an IP address and URL information) from the real name server 36.

The real name server 36 determines whether the keyword (a registration keyword and a group keyword) provided by the searching server 40 is a real name, and when it is found to be a real name, the real name server 36 finds a corresponding IP address from the real name database 33 and provides it to the searching server 40 so that the client 20 may access the web page matched with the keyword selected by the client 20.

When the IP address corresponding to the keyword is matched with at least one other real name, that is, when the corresponding IP address is not a real IP address, the web server 34 provides URL information matched with the keyword to the searching server 40 so that the client 20 may access the corresponding web page.

An operation of the searching system according to the preferred embodiment of the present invention will be described below.

Here, a searching and direct linking operation when the client accesses the searching server and inputs a keyword will be described.

When a user who desires to receive a search service executes a network access program such as a web browser on the client 20 and inputs a web page address (i.e., URL information) for accessing the searching server 40, the URL information is converted by the HTTP (hypertext transfer protocol) on the web browser into packets, and when the packets are transmitted to the searching server 40 through the network 10, the searching server 40 transmits a web page that corresponds to URL information (i.e., a homepage for providing a search word input window) to the client 20, and the transmitted web page is converted into a window format on the client 20 and is displayed to the web browser.

When the client 20 inputs a keyword in the search word input window while accessing the searching server 40, the searching server 40 provides the input keyword to the processing server 35 and requests a group keyword in step S100 and S110.

The keyword processing server 35 of the access agency device 30 determines whether the keyword provided by the searching server 40 is stored in the keyword database 31 to check whether the corresponding keyword is a registration keyword for receiving the direct linking service. When the input keyword is a registration keyword, the keyword processing server 35 searches the keyword database 32 to find a group keyword matched with the registration keyword, and provides the group keyword and the input keyword to the searching server 40 in steps S120 and S130.

The searching server 40 collects information including the corresponding keyword from a plurality of servers connected to the network 10 on the basis of the keyword input by the client 20, generates a search result page on the basis of the collection result, the group keyword provided by the keyword processing server 35, and the keyword input by the client 20, and provides the search result page to the client 20 in steps S140 and S150.

For example, when the keyword input by the client 20 is a general term registration code such as "car," the searching server 40 displays, in the search result page, the group keywords "Renault Samsung Motors," "Hyundai Motor Company," and "Kia Motors" that are stored corresponding to "car", a direct linking tag corresponding to "car," and collected information as follows:

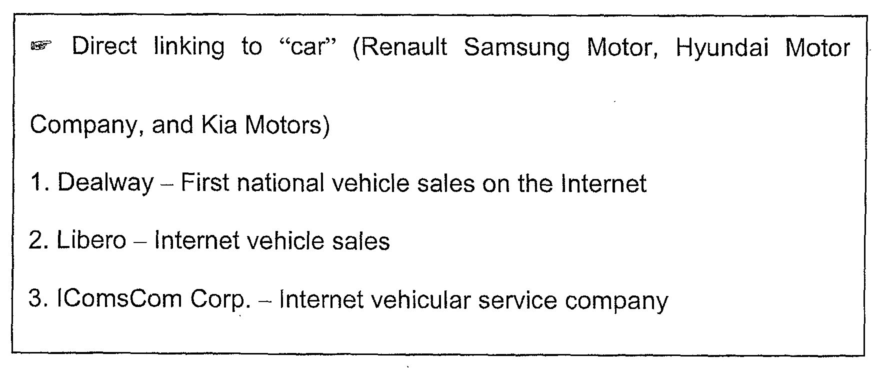

When the keyword input by the client 20 is a company name registration keyword such as "Samsung Electronics," the searching server 40 displays in the search result page collected information together with the direct linking tag matched with the group keywords of the product and service names "Mymy," "Zipel," and "Magic Station" stored corresponding to the keyword "Samsung Electronics" as follows:

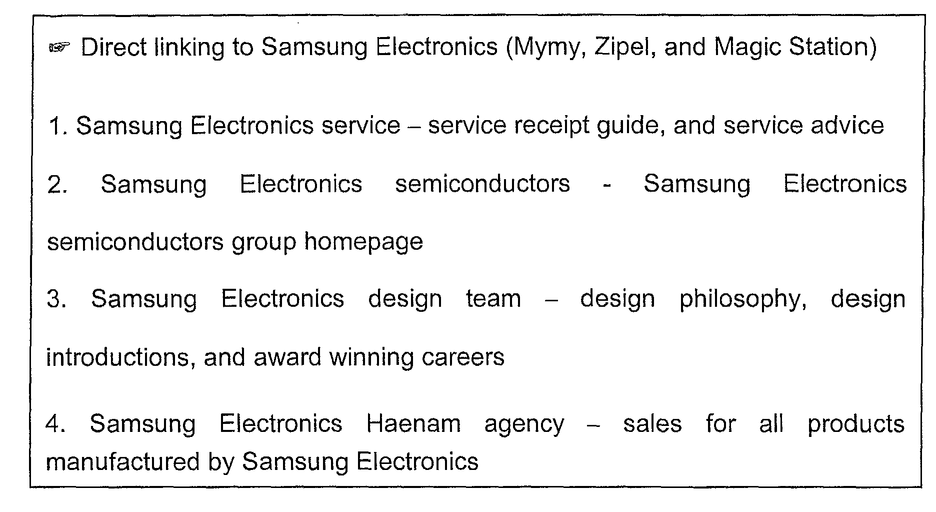

In this instance, the searching server 40 displays advertisements provided by a plurality of advertising servers (not illustrated) to the search result page so as to perform advertising marketing for a plurality of clients.

Hence, the client 20 may read various types of information matched with the keyword from the search result page provided by the searching server 40, check the group keywords for providing the direct linking service related to the keyword, and easily select a desired web page according to the keyword and the group keyword.

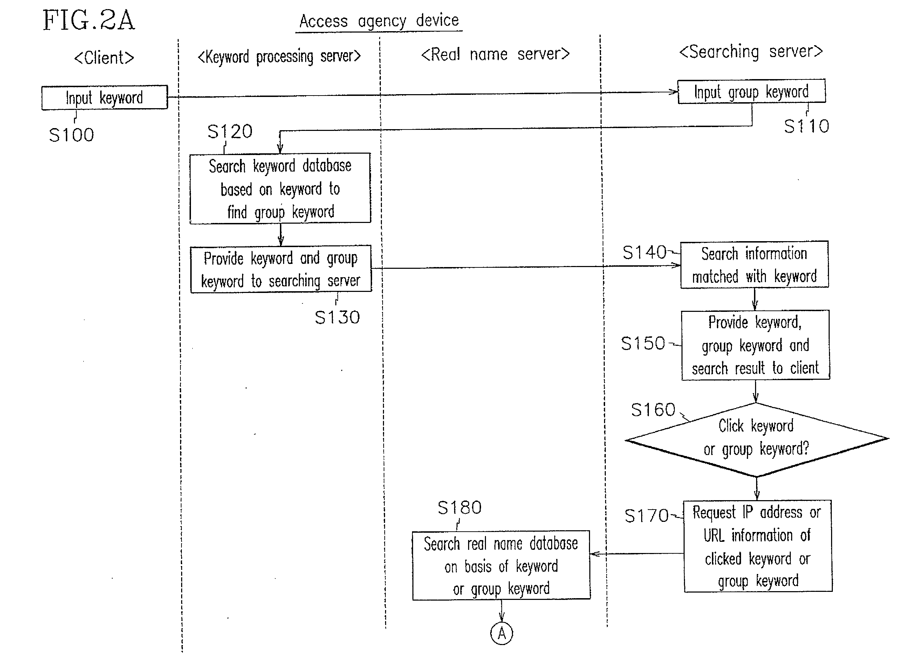

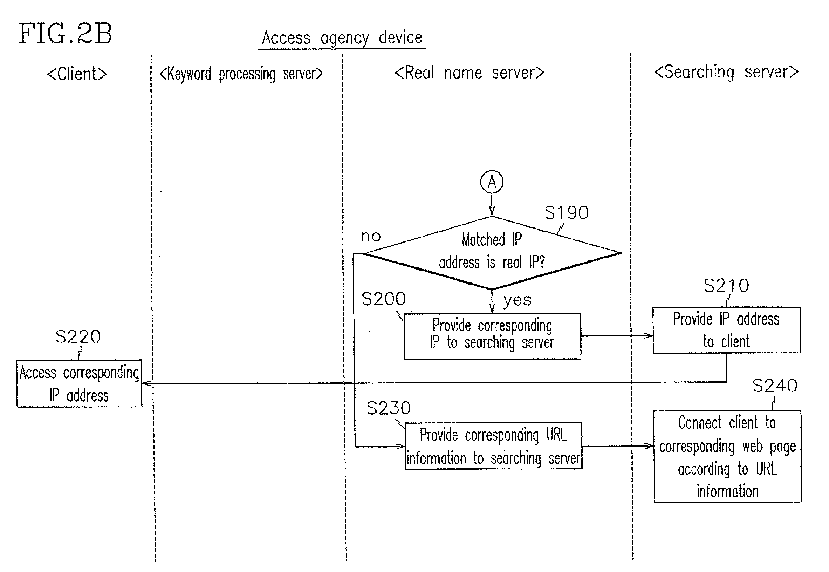

When the client 20 clicks a keyword or a group keyword in the search result page, the searching server 40 requests an Internet address (an IP address and URL information) matched with the keyword or the group keyword from the real name server 36 in steps S160 and S170, and accordingly, the real name server 36 searches the real name database 33, and as shown in FIG. 2, when the IP address corresponding to the selected keyword or the group keyword is a real IP, the real name server 36 provides the corresponding IP address to the searching server 40, and the searching server 40 provides the IP address to the client 20 so that the client 20 may access the web page corresponding to the keyword or the group keyword in steps S190 through S220.

When the IP address matched with the keyword is not a real IP, that is, when at least one real name is matched with the IP address matched with the keyword, the web server 34 provides URL information corresponding to the keyword to the searching server 40, and the searching server 40 connects the client 20 to the corresponding web page according to the URL information in steps S230 and S240.

According to the present invention, the client may receive various types of search information on the keyword, and receive the direct linking service to the web page matched with the corresponding keyword, and in particular, as the direct linking service on the group keyword related to the input keyword is provided, the client may easily access the desired web page through a minimum number of stages.

In the above-described embodiment, the client accesses the searching server, and inputs a keyword into the search word input window provided by the searching server to thereby receive a searching and web page accessing service. Further, when the client inputs a real name for accessing the searching server on a web browser or an exclusive-use browser provided by the access agency device, the access agency device may connect the client to the corresponding searching server, and provide the client with a direct linking service on the keyword and the group keyword together with the group keyword related to the keyword according to a request by the searching server.

In this instance, the client 20 executes an Internet access environment setting program before driving the browser for accessing the Internet to thereby set the real name server 36 of the access agency device by using a server for providing an IP address checking service. Here, it is desirable to previously store the IP address value of the generally used existing English domain name as backup data, and restore the same when the client 20 terminates the Internet access environment setting program so that the default use by the client 20 may not be modified.

In detail, when the user drives a web browser (e.g., Netscape or an exclusive-use web page access program provided by the access agency device) for accessing the Internet or an electronic mail program in the client 20, and inputs an access word for accessing the searching server into an access word input window on the browser, the input access word is provided to the real name server 36 of the access agency device 30, and the real name server 36 determines whether the access word provided by the client 20 is a real name. Additional methods for determining the real name comprise a first one that determines that the input access word is an existing English domain when the access word includes an identifier "." such as "netpia.net" and determines that the input access word is a real name when it includes no identifier".", and a second one that determines according to whether an access word is stored in the real name database.

When the access word provided by the client 20 is a real name, the real name server 36 provides an IP address of the corresponding searching server to the client from the real name database 33 so that the client 20 may access the searching server 40.

When the client uses the real name to access the searching server and inputs a keyword into the search word input window provided by the searching server 40, the searching server 40 requests a group keyword from the keyword processing server 35, and accordingly, the searching service including the group keyword and the direct linking service to the keyword or the group keyword are performed in the like manner of the above-described embodiment.

In the above-mentioned embodiment, the searching server is separated from the access agency device, but the access agency device may include the searching server, and in this case, the searching service and the web page access service are executed in the like manner of the above description when the client accesses the web page of the access agency device and inputs a keyword in the corresponding web page.

In addition, when the client accesses a site in cooperation with the access agency device on the keyword processing task, and inputs a keyword in the input window of the cooperated site, an application program installed in the client checks the keyword input operation and provide the input keyword to thereby execute the searching service and the web page access service in the like manner of the above description. Also, when the client accesses the searching server or the access agency device through a wireless communication network using a wireless terminal, the above-noted searching service and the web page access service are provided.

In the preferred embodiment, the access agency device may record, for each searching server, an accessing number of the client accessed to the searching server through the access agency device to subsequently ask for an agency commission for each searching server according to the accessing number.

The searching system according to the embodiment may be applied to electronic mail, the FTP, and the telnet as well as the WWW, each of which is provided on the network.

According to the searching system of the preferred embodiment of the present invention, the client accesses the desired web page through a minimum number of stages after receiving the group keyword that provides the direct linking service related to the input keyword.

Further, the client receives various categories of search information matched with the keyword as well as various group keywords related to the keyword by only inputting the keyword once.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

## Claims

1. A searching system for providing a searching service to a plurality of clients accessing through a network, comprising:
a group keyword database for storing a group keyword for each keyword;
a real name database for storing a real name and a network address, the real name being matched with the network address;
a processing server for searching the group keyword database on the basis of the input keyword to find a corresponding group keyword;
a searching server for requesting a group keyword from the processing server when a keyword is input from the client accessing through the network, and providing the client with a search result page including the keyword and the group keyword together with search information corresponding to the input keyword; and
a real name server for determining, when the client selects the keyword or the group keyword in the search result page, whether the selected keyword or the group keyword is a real name, and when it is a real name, providing the client with a network address matched with the keyword or the group keyword selected from the real name database so that the client may access the web page matched with the network address.

2. The searching system of claim 1, wherein the searching server requests a network address from the real name server when the client selects the keyword or the group keyword in the search result page, and the real name server provides the searching server with a network address matched with the selected keyword or the group keyword so that the searching server may connect the client to the web page matched with the network address.

3. The searching system of claim 1, further comprising a web server for providing a keyword input window to the client accessing through the network, the web server providing the keyword to the searching server when the keyword is input from the client through the keyword input window.

4. The searching system of claim 1, wherein the keyword stored in the group keyword database comprises a general term registration keyword and a company name registration keyword, and the general term registration keyword is matched with at least one keyword as a group keyword, the keyword including a corresponding general term keyword, and the company name registration keyword is matched with at least one keyword as a group keyword, the keyword corresponding to sale products, product names of services, or service names.

5. A searching method by a system connected to a plurality of clients and searching servers through a network, comprising:
searching a group keyword database on the basis of a keyword, when the keyword input by the client is provided from the searching server, to find a corresponding group keyword and providing the same to the searching server; and
providing the searching server with the network address matched with the selected keyword or the group keyword when a network address request matched with the keyword or the group keyword is input from the searching server, so that the searching server connects the client to the web page corresponding to the network address.

6. The searching method of claim 5, further comprising:
the searching server providing the client with a search result page including the group keyword and the keyword together with search information corresponding to the keyword input by the client; and
requesting a network address matched with a selected keyword or a group keyword when the client selects the keyword or the group keyword in the search result page.

7. A searching method by a system for providing a searching service to a plurality of clients accessing through a network, comprising:
searching a group keyword database on the basis of a keyword, when the keyword is input from the client, to find a corresponding group keyword;
providing the client with a search result page including the keyword and the group keyword together with search information matched with the keyword; and
providing the client with the network address matched with the selected keyword or the group keyword when the client selects the keyword or the group keyword in the search result page, so that the client may access the web page matched with the network address.

8. The searching method of claim 5 or 7, wherein the keyword stored in the group keyword database includes a general term registration keyword and a company name registration keyword, and the general term registration keyword is matched with at least one keyword as a group keyword, the keyword including a corresponding general term keyword, and the company name registration keyword is matched with at least one keyword as a group keyword, the keyword corresponding to products sold by group, product names of services, or service names.
